# EUROPEAN PATENT APPLICATION

(11) **EP 1 178 451 A2**
(43) Date of publication of application: **06.02.2002**
(21) Application number: 01306201.3
(22) Date of filing: 19.07.2001
(51) Int. Cl.: G07F 19/00, G06F 17/60

(54) **Method of and apparatus for executing automated transactions**

(30) Priority: 19.07.2000 US 618962
(71) Applicant: Avaya Technology Corp., Basking Ridge, NJ 07920 (US)
(72) Inventor: Cannon, Thomas Calvin, Fremont, CA 94555-2276 (US)
(74) Representative: Williams, David John

(57) **Abstract**

A method of and apparatus for controlling a user's private verification information uses a a secure controlled server. When making a purchase, rather than the user transmitting their private verification information to a merchant, the merchant contacts the controlled server. During the contact from the merchant to the controlled server, the merchant identifies the user and any non-private information the merchant has regarding the user as well as the nature of the transaction. If the purchase is valid, the controlled server will authorize the transaction to the merchant. In this way, the user never need transmit its private verification information to the merchant. The merchant only learns whether the transaction is authorized, and no further information is exchanged. To ascertain whether the transaction is authorized, the controlled server can either make the determination based upon certain predetermined criteria, or contact the user, such as via e-mail. Additionally, the controlled server can provide other services to the user. The user can establish criteria for receipt of advertisements. Also, the user can request information regarding a particular item for purchase. The controlled server can also be used to control the timing of the receipt of bills, by electronic means rather than through the mail.

## Description

### Field of the Invention:

This invention relates to the field of automated transactions. More particularly, this invention relates to a server for hosting execution of automated transactions, including maintaining security of a user's confidential and personal information and also a method of using the server. This invention also relates to improved convenience and efficiency of using automated information distribution.

### Background of the Invention:

Communication systems have benefited from rapid improvement in recent history. The advancements occur in three major facets including: (1) transport method including protocols, (2) content and (3) action executed. The introduction of the Web, also known as the Internet, provides a non-proprietary transport protocol that allows universal access to communications. The Web supports data transport. This allows the possibility of further automating the action executed facet of communications.

As is known, many Web based applications support transactions. For example, a user can purchase groceries, books and other products via the Web. However, only a few Web based applications automatically execute transactions on behalf of a user.

For a transaction to occur on behalf of a user, the system must be able to verify that it is indeed the user making the request for the transaction. For this to occur, often the user must enter certain verification information, such as a password, PIN number, credit card number, bank account information, account number(s), home address, business address, billing address, date of birth, mother's maiden name, and the like. Often, the private verification information cannot be ascertained by conventional public access means.

Unfortunately, all transactions, except for a cash only transaction, suffer from a common problem. In particular, a user's private verification information can be misused by a non-authorized person. A non-authorized person can gain access to a user's private verification information using legitimate or illegitimate means. Once such access is gained, the non-authorized person can make non-authorized purchases.

Legitimate means of obtaining a user's private verification information can be when the user intentionally provides their private verification information to a sales person and also provides certain other billing information, such as when checking in to a hotel for a business trip a hotel clerk can capture personal information such as name, address, credit card and the like. Illegitimate means could include a hacker surreptitiously taking such information from a Web site. This can occur when a user intends to make a purchase over the internet and provides their credit card number. In either case, once the user's private verification information is ascertained by a non-authorized person, it can be used to make non-authorized purchases against the account of the user.

Another common problem persons suffer is information overload, especially advertisement overload. Additionally, information is provided at the convenience of the information provider and not at the convenience of the receiver. Persons are constantly provided advertisements on Web pages, as billing stuffers, direct mail pieces and the like. Most, if not all, such unrequested information is not useful to the receiver.

Even where the information is useful to the receiver, it is often provided at a time that is not convenient. For example, a receiver may choose to pay all their monthly charges on a particular day of the month, such as the third Saturday. If the invoice for a particular vendor is sent on the first, the receiver must maintain that invoice.

What is needed is a method of securely maintaining a user's private verification information. What is further needed is a method of preventing non-authorized access to a user's private verification information. In addition, what is needed is a method of using the Web to securely maintain a user's private verification information. What is needed is a means for securely maintaining a user's private verification information. What is further needed is a means for preventing non-authorized access to a user's private verification information. In addition, what is needed is a means for using the Web to securely maintain a user's private verification information.

Additionally, what is needed is a remote means for authenticating the user, for non-Web transactions. What is also needed is a remote method of authenticating the user, for non-Web transactions.

What is also needed is a method of obtaining advertising information that is desired while avoiding advertising information that is not useful. What is further needed is a means for obtaining advertising information that is desired while avoiding advertising information that is not useful.

What is needed is a method of receiving information at a convenient time for the receiver. What is also needed is a means for a receiver of information to control when they receive useful information.

### Summary of the Invention:

The present invention is for a method of and apparatus for controlling a user's private verification information. In particular, a secure controlled server maintains the user's private verification information. When making a purchase, rather than the user transmitting their private verification information to a merchant, the merchant contacts the controlled server. During the contact from the merchant to the controlled server, the merchant identifies the user and any non-private information the merchant has regarding the user as well as the nature of the transaction. If the purchase is valid, the controlled server will authorize the transaction to the merchant. In this way, the user never need transmit its private verification information to the merchant. The merchant only learns whether the transaction is authorized, and no further information is exchanged. To ascertain whether the transaction is authorized, the controlled server can either make the determination based upon certain predetermined criteria, or contact the user, such as via e-mail.

Additionally, the controlled server can provide other services to the user. The user can establish criteria for receipt of advertisements. Also, the user can request information regarding a particular item for purchase. The controlled server can also be used to control the timing of the receipt of bills, by electronic means rather than through the mail.

### Brief Description of the Drawings:

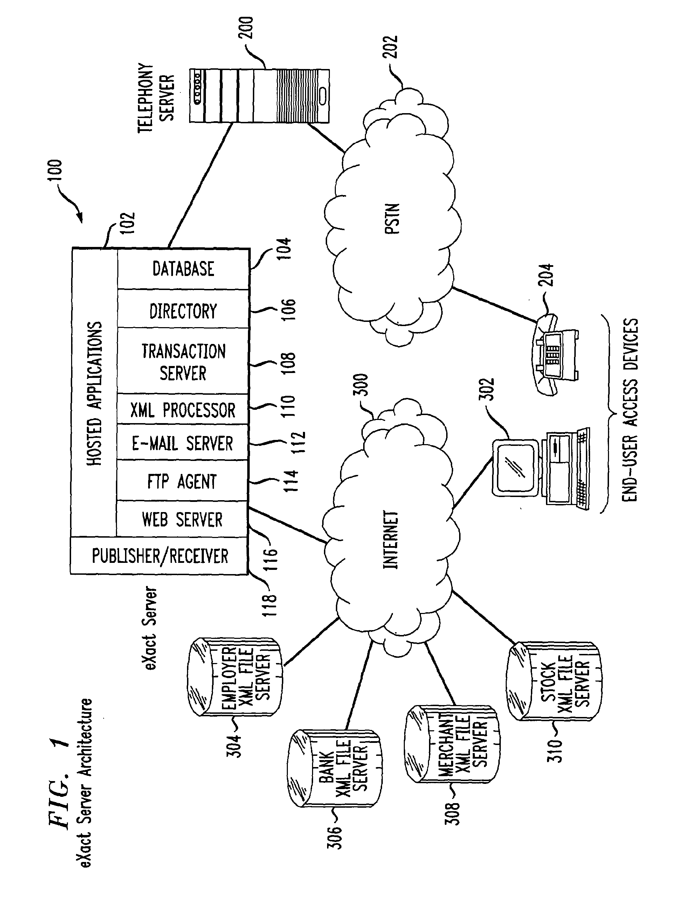

Figure 1 shows an architecture of a controlled server according to the present invention.

### Detailed Description of the Invent ion:

The present invention provides a controlled server for maintaining private verification information for one or more user's. The inventor has coined the term 'eXact Server' for the controlled server. The information stored on the controlled server can include credit card numbers, bank account information, user identification, passwords, PIN numbers, billing address, among other information. In addition, the controlled server represents a single address for a user for hosting and communicating with automated applications, a common attribute model for sharing with all hosted applications, security protection and single user logon for access to all applications.

Figure 1 shows the architecture for the controlled server of the present invention as it resides on the Web. The controlled server 100 can, from a hardware standpoint, be similar to conventional Web servers. However, the controlled server 100 includes functional software elements that make it dissimilar from conventional Web servers. In the preferred embodiment the controlled server 100 operates according to the XML protocol. The controlled server 100 is coupled as a gateway to a telephony server 200 which in turn is coupled to the public switched telephone network PSTN 202. Using a telephone 204, a user can access the controlled server 100 via the PSTN 202 through the telephony server 200. The telephone 204 can be a POTS telephone, a digital telephone, a feature telephone, a PBX telephone or a cellular telephone.

Additionally, the controlled server 100 is coupled to the Web 300 also known as the Internet by any conventional means. Using any conventional data terminal 302, a user can access the controlled server 100 via the Web 300. The data terminal 302 can be a personal computer, a wireless PDA (personal data assistant such as a Palm Pilot®), and the like. As is well known, the Web 300 can be coupled to a user's employer's file server 304, bank file server 306, merchant file server 308 and stock broker file server 310 among many other file servers.

The controlled server 100 includes a plurality of hosted applications 102 including a database 104, a directory 106, a transaction server 108, an XML processor 110, an e-mail server 112, an FTP agent 114 and a Web server 116. Additionally, the controlled server 100 includes a publisher/receiver 118.

A user wishing to make a purchase need only provide the merchant with public information. The merchant can be a Web merchant such that the user enters the request for a purchase using a data terminal 302. A merchant wishing to confirm that a transaction will result in a payment will interact with the controlled server 100 to verify that the user can make the purchase. The merchant will transmit to the controlled server 100 public information about the user, such a name, e-mail address and the like in addition to the amount of the purchase. The only communication from the controlled server 100 to the merchant will be either an authorization for the purchase or a refusal for authorization. In this way, no private verification information for the user is ever transmitted or provided to the merchant. Indeed, the merchant has no need for the user's private verification information.

The controlled server 100 can authorize the transaction directly based upon criteria established in advance by the user. In the alternative, the controlled server 100 can contact the user requesting confirmation of the purchase. When the controlled server 100 does contact the user for confirmation, the transaction does not occur in 'real time.' If confirmation is requested, the transaction cannot take place until the user responds to the request from the controlled server. Preferably, the contact from the controlled server 100 is made by e-mail. The controlled server 100 includes a database that contains the user's e-mail address. If the purchase is authorized by the user, the controlled server 100 then will confirm to the merchant that payment will be made; the merchant can process the transaction knowing it will be paid. No private verification information need be provided to the merchant. All the merchant learns about the user is public information.

The private verification information is entered for the user one time only and maintained by the controlled server 100. The information can be entered by the user directly to a database maintained on the controlled server 100. Alternatively, the user can authorize a trusted agent, such as the service provider that maintains the controlled server 100 to enter the data. This procedure prevents the user's private verification information from repeatedly being transmitted over the internet and further never provides the information to the merchant thereby preventing unauthorized access to the private verification information. This procedure prevents this form of commercial fraud.

The controlled server 100 can be maintained by an Internet service provider. Alternatively, the controlled server 100 can be a captive service of a financial institution, such as a bank, stock brokerage or credit card company.

This controlled server 100 system can also be used when making a transaction in person. For example, a user can make a hotel reservation in advance using the controlled server 100. Upon arriving at the hotel, the user must prove their identity to the satisfaction of the hotel clerk. According to the prior art, a user shows an identification card, such as a driver's license. Under certain circumstances, a driver license number can be used to commit fraud on a user. According to this invention, the user could request access to a keypad or data terminal 302 which is linked to the controlled server 100 via the Web to enter a PIN or other secure code. The controller server 100 then verifies the identity of the user to the merchant.

In the preferred embodiment, the service provider for the controlled server 100 can issue an auto-synchronizing data card that continuously updates a synchronized data code. Such a system prevents a PIN from becoming known through repeated use and provides further security for the user. The user must prevent the data card from loss.

Financial, credit institutions and merchants routinely send out paper invoices to consumers via the postal service. In many circumstances, the user that receives the invoice is not prepared to make payment at that time. For example, the user may pay all invoices on a predetermined day of the month, or be short of funds. Using the controlled server 100, a financial, credit institution or merchant can securely post an invoice for the convenience of the user. The user can access their invoice and make a payment, either via the postal service, or, if the creditor authorizes, by electronic funds transfer.

Many vendors and service providers provide notification of products and services to prospective consumers via bill stuffers, direct mail pieces, flyers, and via banners on Web pages. Often the recipient of such notifications has little or no interest in the product or services advertised. In those cases, the expense and effort to send that notification is wasted. To resolve this waste, the user can enter their preferences into a database 104 maintained by the controlled server 100. The preferences can refer to specific products, services, locales, times, among other preference types. Vendors will provide prospective notifications to the controlled server 100. The controlled server 100 will only notify users of products and services that correlate with their listed preferences. Waste is eliminated.

This service can be expanded so that users can enter into the controlled server 100 information regarding a specific product or service they need or desire. Additionally, the user can enter a price or cost at which they would make a purchase. Similarly, vendors and service providers can enter information including the price charged for products and services. The controlled server 100 will notify the user when their sought product or service is available at or below the specified price. Additionally, for Web vendors the user can simply respond to the notification by electing to make a purchase. Because the user's private verification information is already maintained by the controlled server 100, it will authorize the transaction.

This invention has been described in terms of specific embodiment is incorporating details to facilitate the understanding of the principles of construction and operation of the invention. Such reference herein to specific embodiment and the details thereof is not intended to limit the scope of the claims and hereto. It will be apparent to those of ordinary skill in the art that modifications can be made in the embodiment chosen for illustration without departing from the spirit and scope of the invention. Specifically, it will be apparent to one of ordinary skill in the art device of the present invention could be implemented in several different ways and the apparatus disclosed above is only illustrative of the before embodiment invention and is in no way limitation.

## Claims

1. A method of authorizing a transaction between a user and a merchant and for confirming that payment will be made comprising the steps of:
a. maintaining a database of private verification information for the user;
b. upon a request from the user, initiating contact from the vendor to a controlled server; and
c. the controlled server providing authorization to the merchant without the private verification information for the user being transmitted to the merchant.

2. The method according to claim 1 further comprising the step of providing the user access to a data terminal for accessing the controlled server to provide authentication.

3. An apparatus for authorizing a transaction between a user and a merchant and for confirming that payment will be made comprising:
a. means for maintaining a database of private verification information for the user;
b. upon a request from the user, means for initiating contact from the vendor to a controlled server; and
c. means for the controlled server to provide authorization to the merchant without the private verification information for the user being transmitted to the merchant.

4. The apparatus according to claim 3 further comprising means for providing the user access to a data terminal for accessing the controlled server to provide authentication.

5. A method of providing relevant notifications to a user comprising the steps of:
a. maintaining a database of user preferences;
b. maintaining a database of vendor notifications; and
c. providing predetermined notifications to the user in accordance with the user

6. A method of invoicing a user comprising the steps of::
a. maintaining a database of user preferences;
b. maintaining a database of vendor invoice information; and
c. providing electronic access of vendor invoice information to the user.

7. An apparatus for providing relevant notifications to a user comprising the steps of:
a. means for maintaining a database of user preferences;
b. means for maintaining a database of vendor notifications; and
c. means for providing predetermined notifications to the user in accordance with the user preferences.

8. An apparatus for invoicing a user comprising the steps of::
a. means for maintaining a database of user preferences;
b. means for maintaining a database of vendor invoice information; and
c. means for providing electronic access of vendor invoice information to the user.
